# EUROPEAN PATENT APPLICATION

(11) **EP 1 662 492 A1**
(43) Date of publication of application: **31.05.2006**
(21) Application number: 04720706.3
(22) Date of filing: 15.03.2004
(51) Int. Cl.: G11B 7/005, G11B 7/0045, G11B 20/14

(54) **WOBBLE SIGNAL DEMODULATING CIRCUIT AND OPTICAL DISC**

(30) Priority: 02.09.2003 JP 2003309889; 07.10.2003 JP 2003348378
(71) Applicant: Ricoh Company, Ltd., Tokyo 143-8555 (JP)
(72) Inventor: SUGATA, Kohichiroh, Sagamihara-shi, Kanagawa 228-0811 (JP)
(74) Representative: Mounteney, Simon James
(86) International application number: PCT/JP2004/003399
(87) International publication number: WO 2005/024804

(57) **Abstract**

A wobble signal demodulation circuit carries out phase demodulation of a wobble signal acquired from a reflection light reflected from a recording surface of an optical disk, the recording surface carrying a meandering track thereon, wherein the wobble signal including a carrier wave part having a predetermined fundamental frequency and a phase modulation wave part added with predetermined information. The wobble signal demodulation circuit includes a bandpass filter having a central frequency in the vicinity of the fundamental frequency, the bandpass filter extracting a signal of the carrier wave part from said wobble signal; a frequency adjustment circuit that adjusts the central frequency of the bandpass filter based on a frequency adjustment signal corresponding to a linear velocity of the optical disk under rotation; a signal generation circuit that produces a clock signal from the extracted signal of the carrier wave part; and a modulation-wave demodulation circuit that carries out phase demodulation for the phase demodulation part of the wobble signal in synchronization with the clock signal.

## Description

### TECHNICAL FIELD

The present invention relates to wobble signal demodulation circuit and optical disk apparatus and in more detail to a wobble signal demodulation circuit that performs phase demodulation of a wobble signal obtained from an optical disk and an optical disk apparatus having such a wobble signal demodulation circuit.

### BACKGROUND ART

With progress in the digital technology and improvement in the data compression technology, optical disks such as CD (Compact Disc) or DVD (Digital Versatile Disc), which is an optical disk capable of recording data of seven times as large as the data amount recorded in a disk body of the same diameter as in the case of a CD, are drawing attention these days as the medium for storing user data such as the music, movie, photograph and also computer software. With decrease of cost, the use of optical disk apparatuses that use an optical disk as the medium of data recording is also spreading.

In a write-once read-many optical disk such as a DVD+R (DVD+Recordable) disk or a rewritable optical disk such as a DVD+RW (DVD+Rewritable) disk, it is generally practiced to provide meandering (wobbling) to a recording track at the time of manufacture of the disk and information is recorded by modulating the wobbling form. Reference should be made to Japanese Laid-Open Patent Publication 10-69646. Thereby, phase modulation is employed in a DVD+R disk and a DVD+RW disk (referred to also as "DVD+ family"), for example.

Thus, in an optical disk apparatus designed for a DVD+ family disk, detection is made on the wobble signal corresponding to the wobbling track pattern on the disk from an optical beam produced by an optical source and reflected back by the track, and extraction of the clock signal is made from the wobble signal thus detected. Further, extraction of the modulated information is made by applying phase demodulation to the wobble signal in synchronization with the clock signal. In the DVD+ family disks, the address signal is particularly important among the information added to the track. In an optical disk apparatus, it should be noted that control of recording position is made at the time of recording user data based on the address information, clock signal, and the like. Further, various apparatuses having a circuit for phase-demodulating the wobble signal are proposed (Japanese Laid-Open Patent Application 2001-524466, Japanese Laid-Open Patent Application 2001-126413, Japanese Laid-Open Patent application 2002-208141, Japanese Laid-Open Patent Application 2003-115174, and the like). In addition, it should be noted that phase modulation is achieved also in the electronic cameras and satellite broadcast receivers (Reference should be made to Japanese Patent 6-19898, Japanese Patent 2,893,496, and the like).

Usually, various filters are used for the circuit used for acquiring the address information from a wobble signal. For the purpose of suppressing cost, these filters are generally constructed by using general-purpose components. Because of this, there tends to appear a variation in the frequency response characteristics of the filter, while this leads to the problem of variation of quality of the signal thus phase-modulated. With increase of the recording speed, it is expected that there would appear various factors in future that may cause noise, while it is also predicted that there would be a decrease in the tolerable noise level in future. Thereby, it is expected that there would be caused a problem, associated with the variation in the quality of the signal thus phase demodulated, in that the correct address information may not be acquired. When this occurs, there arises a problem of degradation of recording quality. This in turn would invite the requirement of further improvement in the precision of phase demodulation

### DISCLOSURE OF THE INVENTION

The present invention is made in view of the situation noted above and has its first object of providing a wobble signal demodulating circuit that can phase-demodulate the wobble signal with high precision.

A second object of the present invention is to provide an optical disk apparatus capable of performing recording with high recording quality.

In order to achieve the foregoing first object, the present invention provides a wobble signal demodulating circuit for carrying out phase demodulation of a wobble signal acquired from a reflection light reflected from a recording surface of an optical disk carrying thereon a track of a wobbling pattern, said wobble signal including a carrier wave part having a predetermined fundamental frequency and a phase modulation wave part added with predetermined information, said wobble signal demodulating circuit comprising: a bandpass filter having a central frequency in the vicinity of said fundamental frequency and extracting a signal of said carrier wave part from said wobble signal; a frequency adjustment circuit adjusting said central frequency of said bandpass filter based on a frequency adjustment signal corresponding to a linear velocity of said optical disk under rotation; a signal generation circuit producing a clock signal from said extracted signal of said carrier wave part; and a modulation-wave demodulating circuit demodulating said phase modulation wave part of said wobble signal by phase demodulation in synchronization with said clock signal.

With this, the wobble signal acquired based on the reflection light from the recording surface of the optical disk is processed by the bandpass filter having the central frequency near the fundamental frequency of the carrier part, and the signal of the carrier part is extracted. Further, the clock signal is produced by the signal generation circuit from the carrier part extracted by the bandpass filter, and the phase modulation wave part is subjected to the phase demodulation by the modulation wave demodulation circuit in synchronization with this clock signal. Here, it should be noted that the central frequency of the bandpass filter is adjusted by the frequency adjustment circuit based on the frequency adjustment signal corresponding to the linear velocity of the rotating optical disk, and thus, it becomes possible to prevent the deterioration of output signal of the bandpass filter even when the linear velocity of the rotating optical disk is increased and the fundamental frequency is increased. Thereby, it becomes possible to extract the carrier wave component contained in the wobble signal with high precision. Thus, the precision of the clock signal is improved, and as a result, it becomes possible to phase-demodulate the wobble signal with high precision.

Further, in order to achieve the foregoing first object, it is possible to construct the wobble signal decoding circuit for carrying out phase demodulation of a wobble signal acquired based on a reflection light reflected back from a recording surface of an optical disk carrying thereon a track having a wobbling pattern, said wobble signal including a carrier wave part having a predetermined fundamental frequency and a phase modulation wave part added with predetermined information, such that the wobble signal decoding circuit comprises: a bandpass filter having a central frequency in the vicinity of said fundamental frequency and extracting a signal of said carrier wave part; a frequency adjustment circuit adjusting said central frequency of said bandpass filter based on a frequency adjustment signal corresponding to a linear velocity of said optical disk under rotation; a first signal generation circuit producing a first clock signal from said extracted signal of said carrier wave part; a second signal generation circuit producing a second clock signal from said signal of said carrier wave part or said first clock signal with a frequency identical with a frequency of said first clock signal but different in phase with respect to a phase of said first clock signal; a switch selectively outputting one of said plural clock signals; and a modulation wave demodulation circuit phase-demodulating said phase modulation wave part of said wobble signal in synchronization with said selected clock signal.

With this, the wobble signal acquired based on the reflection light from the recording surface of the optical disk is processed by the bandpass filter having the central frequency in the vicinity of the fundamental frequency of the carrier wave part and the signal of the carrier wave part is extracted. Thereby, the first clock signal is produced by the first signal generation circuit from the carrier wave part extracted by the bandpass filter, and the phase modulation wave part is subjected to phase-demodulation by the modulation wave demodulation circuit in synchronization with the first clock signal. Here, it should be noted that the central frequency of the bandpass filter is adjusted by the frequency adjustment circuit based on the frequency adjustment signal corresponding to the linear velocity of the rotating optical disk, and thus, it becomes possible to prevent the deterioration of the output signal of the bandpass filter even in the case the linear velocity of the rotating optical disk is increased and the fundamental frequency is increased. Thereby, it becomes possible to extract the carrier wave component contained in the wobble signal with high precision. Thus, the precision of the first clock signal is improved and as a result, it becomes possible to phase-demodulate the wobble signal with high precision. Further, because the frequency of the first clock signal is adjusted by determining the deviation of phase of the first clock signal and the wobble signal based on the result of the respective phase demodulations obtained by using the first and second clock signals of the same frequency but different phases and because the frequency of the first clock signal is adjusted so as to eliminate or decrease this deviation, the phase deviation of the clock signal (first clock signal) used for the phase demodulation is adjusted, and it becomes possible to phase-demodulate the wobble signal with high precision also with this respect.

In order to achieve the foregoing second object, it is possible to construct an optical disk apparatus by using the foregoing wobble signal demodulating circuit that achieves the first object. With this, the carrier wave component contained in the wobble signal is extracted with high precision based on the frequency adjustment signal created by the frequency adjustment creation means, and thus, the precision of demodulation of the phase demodulation part of the wobble signal is improved. Thus, it becomes possible to acquire the positional information from the predetermined information contained in the phase modulation wave part of the wobble signal with high precision. Thereby, the recording start position is determined with high precision by the data recording means, and as a result, it becomes possible to carry out high quality recording.

### BRIEF DESCRIPTION OF THE DRAWINGS

Other objects, features and advantages of the present invention will become apparent from the following description when read in conjunction with the attached drawings.
Figure 1 is a block diagram showing the construction of an optical disk apparatus according to an embodiment of the present invention;
Figure 2 is a diagram explaining the meander form of the tack in the optical disk;
Figure 3 is a diagram explaining the construction of an information frame;
Figures 4A and 4B of Figure 4 are diagrams respectively explaining the meander form of an ADIP information part;
Figures 5A and 5B of Figure 5 are diagrams respectively explaining the meander form of a synchronous information part;
Figure 6 is a diagram explaining the data bit of the ADIP information part;
Figure 7 is a diagram explaining the construction of an optical pickup apparatus of Figure 1;
Figure 8 is a block diagram explaining the construction of a playback signal processing circuit of Figure 1;
Figure 9 is a block diagram explaining the construction of a clock signal generation circuit, an adjustment circuit and a demodulation signal generation circuit of Figure 8 respectively;
Figure 10 is a timing chart for explaining the function of the demodulation signal generation circuit of Figure 8;
Figure 11 is a timing chart explaining the function of the address decoding circuit of Figure 8;
Figure 12 is a flowchart explaining the processing for acquiring optimal frequency adjustment quantity and optimal phase adjustment quantity for each linear velocity;
Figure 13 is a waveform diagram explaining the largest amplitude;
Figure 14 is a flowchart explaining a record processing operation in the optical disk apparatus carried out in response to a record request command from a host;
Figure 15 is a flowchart explaining a playback processing operation in the optical disk apparatus carried out in response to a playback request command from the host;

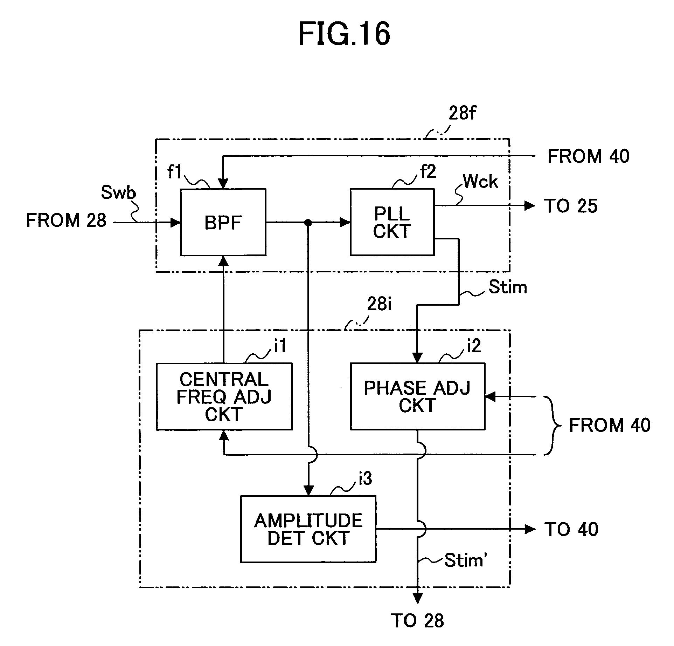

Figure 16 is a block diagram explaining an adjustment circuit having an amplitude detection circuit;
Figure 17 is a block diagram explaining the adjustment circuit having a jitter detection circuit;
Figure 18 is such a diagram explaining the minimum jitter;
Figure 19 is a block diagram explaining another example of the construction of the demodulation signal generation circuit of Figure 8;
Figure 20 is a block diagram explaining the adjustment circuit having a memory;
Figure 21 is a block diagram explaining other example of construction of the clock signal generation circuit, adjustment circuit and the demodulation signal generation circuit of Figure 8;
Figure 22 is a flowchart of the processing that the CPU carries out by using the circuit of the construction such as the one shown in Figure 21;
Figure 23 is a timing chart of showing the signals in the case there are no phase difference between an output signal Sg2 and an output signal Sg8; and
Figure 24 is a timing chart of the signals in case there is a phase difference between the output signal Sg2 and the output signal Sg8.

Prominent reference numerals used in the drawings are explained below.

15 is an optical disk, 20 is an optical disk apparatus, 23 is an optical pickup device (a part of data recording means), 28f is a clock signal generator circuit (a part of wobble signal decoding circuit), 28g is a demodulating signal generation circuit (modulation wave demodulation circuit), 28i is an adjusting circuit (a part of wobble signal demodulation circuit), 39 is a flash memory (phase adjustment memory, frequency adjustment memory), 40 is a CPU (a part of data recording means, phase adjustment signal generation means, frequency adjustment signal generation means), f1 is a bandpass filter circuit (bandpass filter), f2 is a PLL circuit (signal generation circuit), i1 is a central frequency adjustment circuit (frequency adjustment circuit), i2 is a phase adjustment circuit, g8 is a first signal generation circuit, g8' is a second signal generation circuit, and S is a switch.

### BEST MODE FOR IMPLEMENTING THE INVENTION

Hereinafter, an embodiment of the present invention will be explained with reference to the drawings.

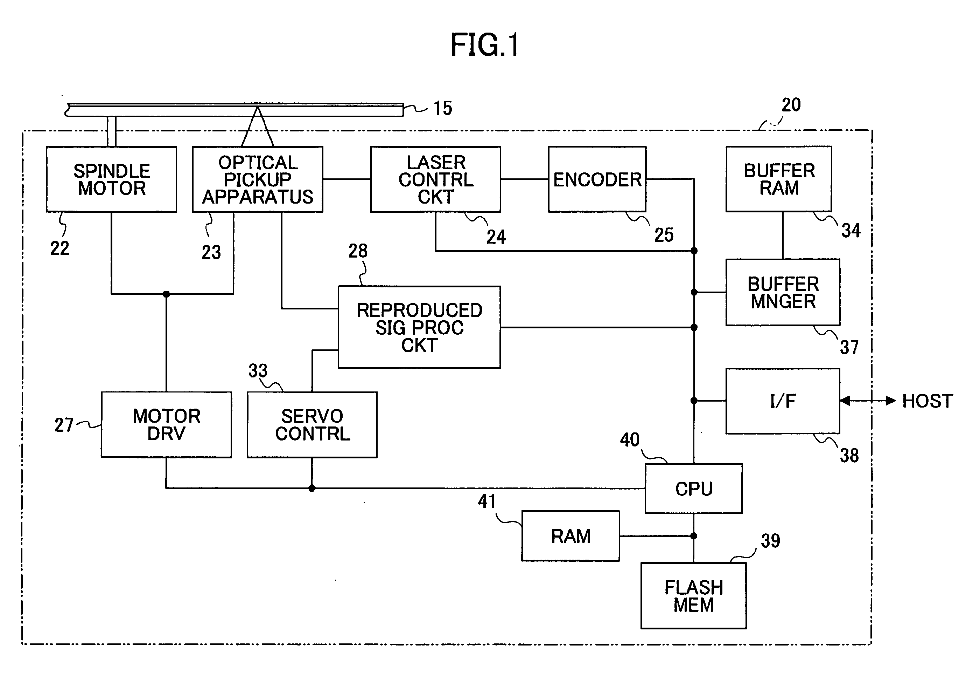

Figure 1 shows the outline construction of an optical disk apparatus according to an embodiment of the present invention.

An optical disk apparatus 20 shown in Figure 1 comprises: a spindle motor 22 driving an optical disk 15 for causing rotation thereof, an optical pickup apparatus 23, a laser control circuit 24, an encoder 25, a motor driver 27, a reproduced signal processing circuit 28, a servo controller 33, a buffer RAM 34, a buffer manager 37, an interface 38, a flash memory 39, a CPU 40, a RAM 41, and the like. In Figure 1, it should b e noted that the connection lines show the flow of representative signals and information, but not intended to represent all the connections of the blocks. In the explanation hereinafter, it is assumed that the present embodiment uses the information recording medium in conformity with the DVD+R standard for the optical disk 15.

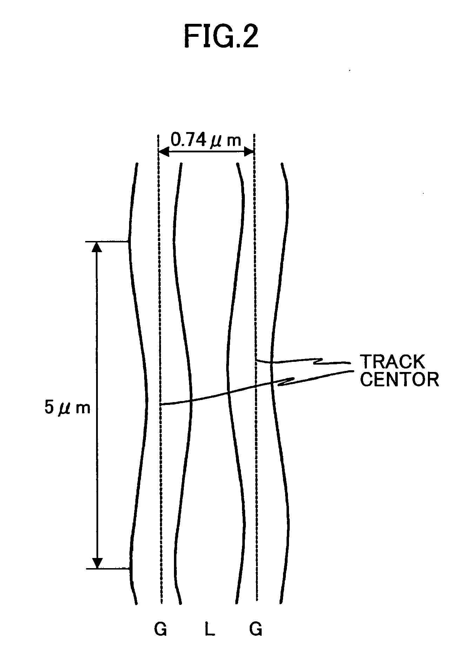

On the record surface of optical disk 15, there is formed a groove (G) of spiral form as a guide groove. In the art of optical disks, the part forming a projection with regard to the incident direction of the laser beam is called as a groove G, while the projecting part is called as a land (L). Thereby, the groove G forms the track for information recording, and information is thus recorded on the groove G. Further, it should be noted that the groove is formed in the meandering form (wobbling), an example of which is shown in Figure 2.

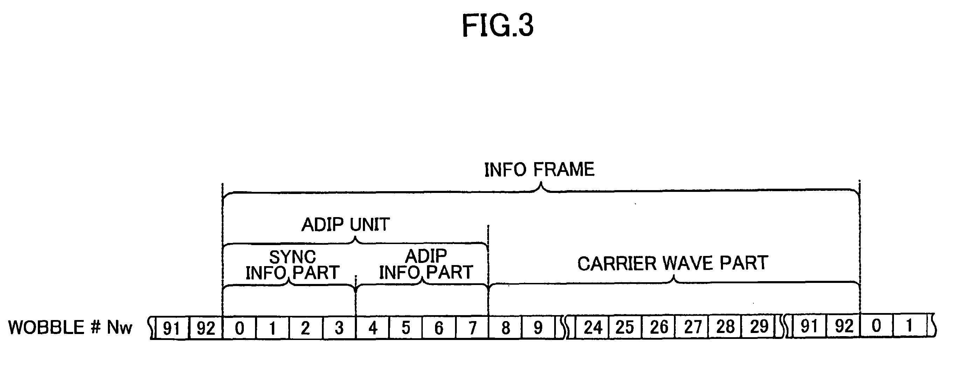

According to the standard of DVD+R, the wobbling form of the track is determined by an ADIP unit and a carrier wave. The ADIP unit includes various information. Further, the carrier wave is used for creating the reference clock signal or the timing clock signal used for phase demodulation. In the present embodiment, the fundamental unit formed of the carrier wave and the ADIP unit will be called as the information frame. Further, the part of the carrier wave of the information frame will be referred to as the carrier wave part. One information frame has the size of 93 wobbles (wobble number Nw = 0 - 92) as shown in Figure 3, assuming that one period (called wobble period) of the carrier wave has the size of one wobble. Further, the wobble numbers Nw of 0 - 7 correspond to the ADIP unit, while the wobble numbers Nw of 8 - 92 correspond to the carrier wave part. The ADIP unit is formed, in the data zone in which recording of data is made, of a region containing the synchronizing information (referred to hereinafter as "synchronizing information part") and a region containing the address information (referred to hereinafter as "ADIP information part"). Thereby, the wobble numbers 0 - 3 are used for the synchronizing information part, while the wobble numbers 4 - 7 are used for the ADIP information part. Thus, the synchronizing information part has the size of 4 wobbles, while the ADIP information part has the size of 4 wobbles. Each of the foregoing information parts is subjected to phase modulation (PSK: Phase Shift Keying).

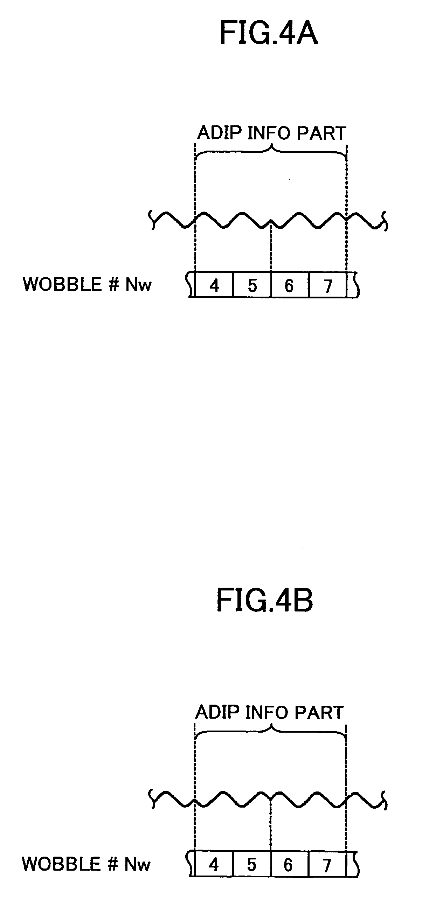

It should be noted that the ADIP information part represents one bit data by four wobbles. When the data is "0", the first two wobbles are made to have the same phase as the carrier wave part and the latter two wobbles are formed to have an inverse phase of the carrier wave part as shown in Figure 4A. On the other hand, in the case the data is "1", the first two wobbles are made to have the inverse phase to the carrier wave part and the latter two wobbles are made to have the same phase as the carrier wave part as shown in Figure 4B. Further, data of 51 bits is necessary for acquiring the address data.

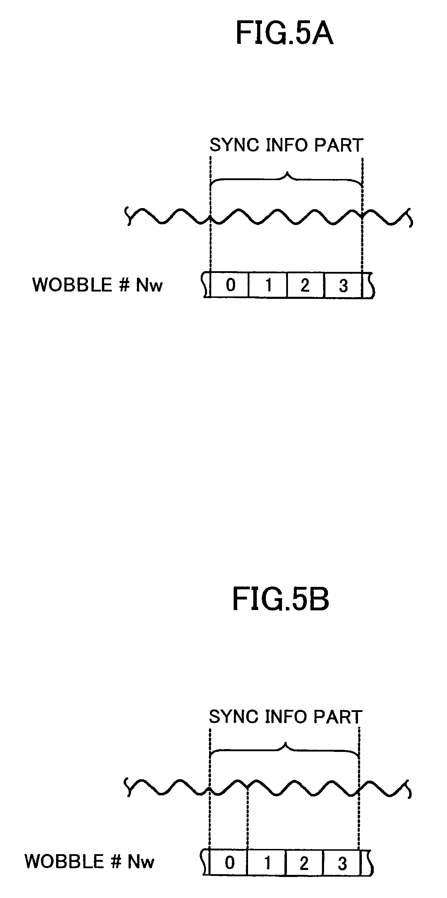

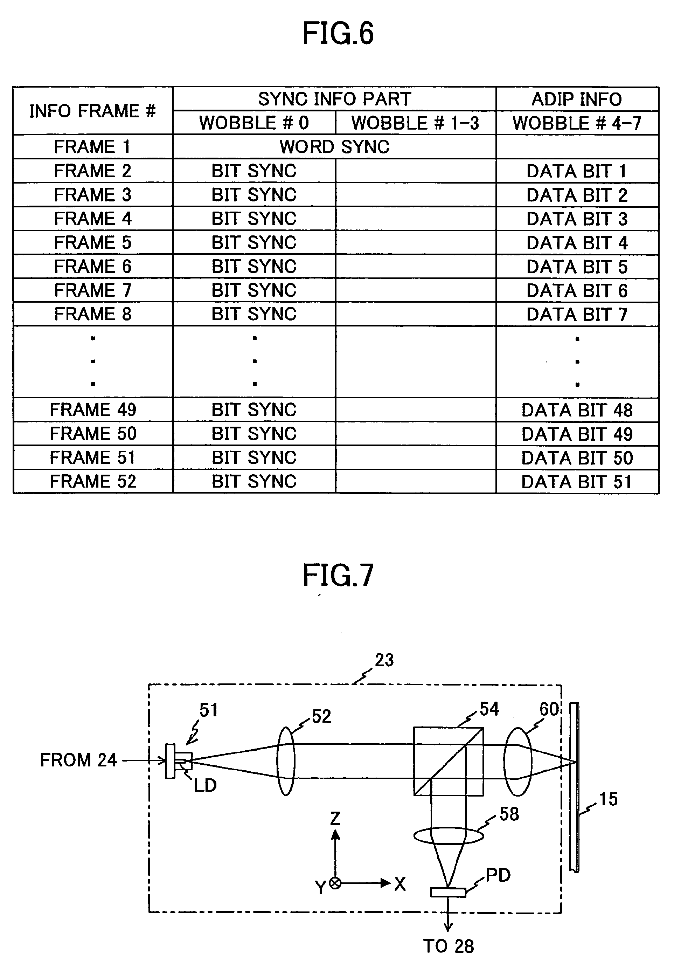

In the case the first bit of the data is stored in the ADIP information of the next information frame, the synchronizing information part causes the word synchronizing information (word sync), and thus all of the four wobbles, to have the inverse phase of the carrier wave part as shown in Figure 5A. Further, in the case data is stored in the ADIP information part, the synchronizing information part makes the bit synchronizing information (bit sync), and thus the first wobble, to have the inverse phase of the carrier wave part and the remaining three wobbles to have the same phase as the carrier wave part as shown in Figure 5B. Thus, as shown in Figure 6, single address data is obtained from the 52 information frames.

The optical pickup apparatus 23 is an apparatus irradiating a laser beam upon the recording surface of the optical disk 15 formed with the tracks and receiving the reflected light from the recording surface. For example, this optical pickup apparatus 23 comprises an optical source unit 51, a collimator lens 52, a beam splitter 54, objective lens 60, detection lens 58, detecting device PD, and also a driving system (focusing actuator, tracking actuator and also seeking motor) not illustrated.

It should be noted that the optical source unit 51 has a construction that includes a laser diode LD used for the optical source such that the optical source emits a laser light with the wavelength of 660nm. In the present embodiment, it should be noted that the optical source unit 51 is provided such that the laser beam emitted therefrom has the maximum strength in the +X direction.

The collimator lens 52 is disposed at the +X side of the optical source unit 51 and changes the optical beam emitted from the optical source unit 51 to a generally parallel light.

The beam splitter 54 is disposed at the -X side of the collimator lens 52 and passes the optical beam after it has been changed to the generally parallel light by the collimator lens 52. Further, the beam splitter 54 divides the optical beam (return beam) reflected by the recording surface of the optical disk 15 in the -Z direction.

The objective lens 60 is disposed at the +X side of the beam splitter 54 and focuses the optical beam passed through the beam splitter 54 upon the recording surface of the optical disk 15.

The detection lens 58 is disposed at the -Z side of the beam splitter 54 and focuses the return optical beam divided by the beam splitter 54 in the - Z direction on the optical surface of the photodetector PD. It should be noted that the photodetector PD has a construction of including plural photodetector elements and provides a signal including the wobble signal information, playback data information, focusing error information, tracking error information, and the like, to the reproduced signal processing circuit 28.

The focusing actuator (not illustrated) is an actuator for driving the objective lens 60 with a minute amount in the focusing direction coincident to the optical axis direction of the objective lens 60 (X-axis direction in the present case).

The tracking actuator (not illustrated) is an actuator driving the objective lens 60 with a minute amount in the tracking direction perpendicular to the tangential direction of the track (Z-direction in the present case).

The seek motor (not illustrated) is a motor driving the optical pickup apparatus itself in the sledge direction (Z-direction in the present case).

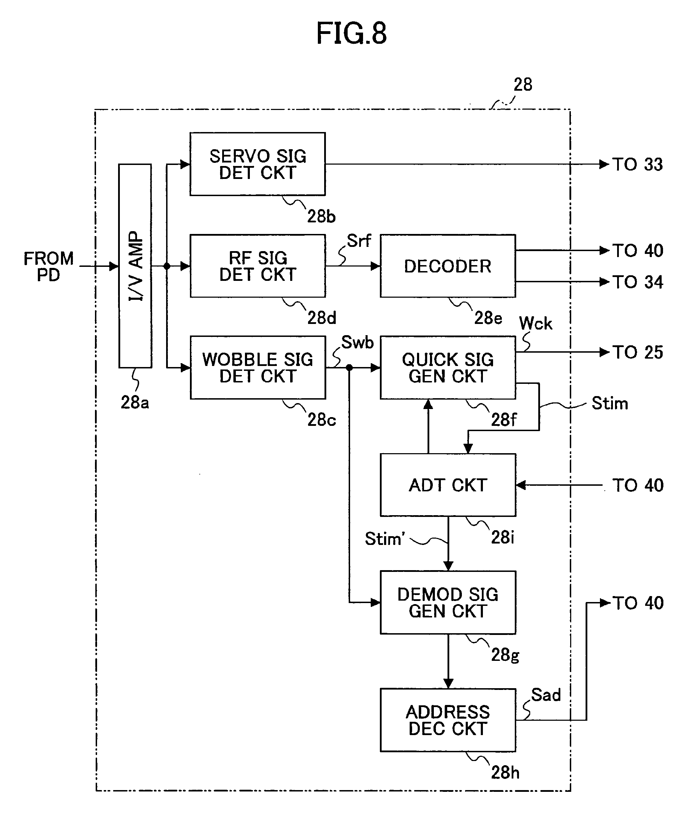

As shown in Figure 8, the reproduced signal processing circuit 28 is formed of an I/V amplifier 28a, a servo signal detection circuit 28b, a wobble signal detection circuit 28c, an RF signal detection circuit 28d, a decoder 28e, a clock signal generation circuit 28f, a demodulation signal generation circuit 28g as the modulation wave demodulation circuit, an address decoding circuit 28h, an adjustment circuit 28i, and the like. Meanwhile, it should be noted that the arrows in Figure 8 merely show the flow of representative signals or information and by no means intended to indicate all the connection of the blocks.

The I/V amplifier 28a converts the current signal from the photodetector PD to a voltage signal and amplifies the same with a predetermined gain. The servo signal detection circuit 28b detects the servo signal (focusing error signal, tracking error signal, and the like) based on the output signal of the I/V amplifier 28a. The servo signal thus detected is supplied to the servo controller 33. The wobble signal detection circuit 28c detects the wobble signal (Swb) based on the output signal of the I/V amplifier 28a. The wobble signal Swb thus detected is output to the clock signal generation circuit 28f and the demodulation signal generation circuit 28g. The RF signal detection circuit 28d detects the RF signal (Srf) based on the output signal of the I/V amplifier 28a. The RF signal Srf thus detected is supplied to the decoder 28e.

It should be noted that the decoder 28e carries to demodulation processing, error detection processing, and the like with regard to the RF signal Srf, and stores the processed RF signal Srf in the buffer RAM 34 via the buffer manager 37 as the playback data with error correction processing in the event an error has been detected. It should be noted that the RF signal contains address data, and thus, the decoder 28e supplies the address data extracted from the RF signal to the CPU 40.

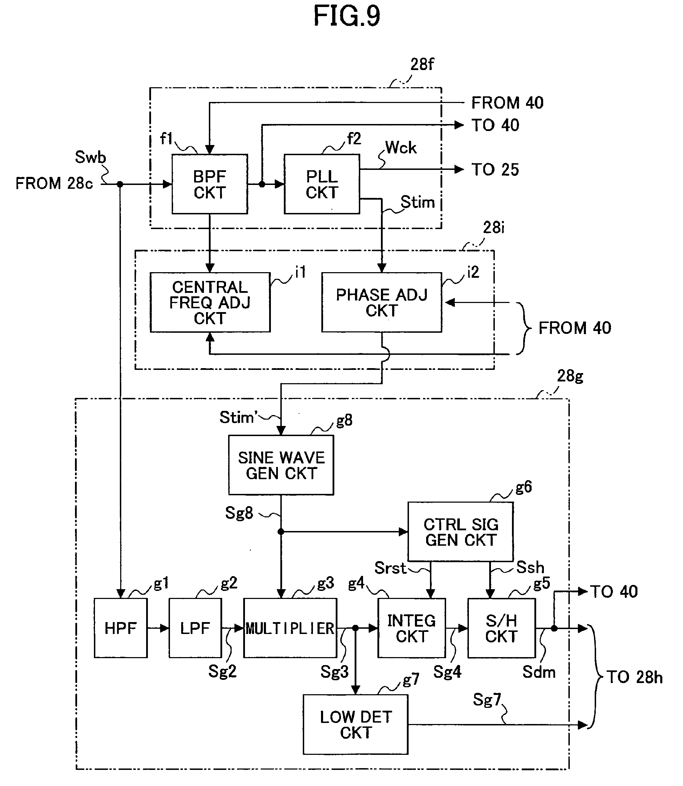

The clock signal generation circuit 28f generates a reference clock signal (Wck) and a timing clock signal (Stim) based on the wobble signal Swb. This clock signal generation circuit 28f includes a bandpass filter (BPF) circuit f1 used for a bandpass filter and a PLL (Phase Locked Loop) circuit f2 used for the signal generation circuit as shown in the example of Figure 9. This bandpass filter circuit f1 extracts the carrier wave component from the wobble signal Swb. Further, the central frequency of the bandpass filter circuit f1 is set by the CPU 40. Further, the PLL circuit f2 generates the reference clock signal Wck and the timing clock signal Stim in synchronization with the output signal of the bandpass filter circuit f1. The reference clock signal Wck thus generated is supplied to the encoder 25, while the timing clock signal Stim is supplied to the adjustment circuit 28i. It should be noted that the reference clock signal Wck has the period of 1/32 the period of the wobble signal Swb. Further, the period of the timing clock signal Stim is identical with that of the wobble signal Swb.

As shown in the example of Figure 9, the adjustment circuit 28i has a central frequency adjustment circuit i1 and the phase adjustment circuit i2. This central frequency adjustment circuit i1 adjusts the central frequency of the foregoing bandpass filter circuit f1 in response to the frequency adjustment signal from the CPU 40. Further, the phase adjustment circuit i2 adjusts the phase of the foregoing timing clock signal Stim in response to the phase adjustment signal from the CPU 40. The timing clock signal Stim thus subjected to the phase adjustment is supplied to the demodulation signal generation circuit 28g as an adjustment timing clock signal Stim'.

The demodulation signal generation circuit 28g phase-demodulates the wobble signal Swb in synchronization with the foregoing adjustment timing clock signal Stim' and produces a demodulation signal. The demodulation signal thus produced is provided to the address decoding circuit 28h. According to the example of Figure 9, the demodulation signal generation circuit 28g is formed of a highpass filter (HPF) g1, a lowpass filter (LPF) g2, a multiplier g3, an integration circuit g4, a sample and hold circuit (S/H circuit) g5, a control signal generation circuit g6, a low level detection circuit g7, a sine wave generation circuit g8, and the like.

It should be noted that the highpass filter g1 eliminates the low frequency noise included in the wobble signal Swb more or less completely. Further, the foregoing lowpass filter g2 removes the high frequency noise included in the output signal of the highpass filter. Thus, the output signal Sg2 of the lowpass filter circuit g2 becomes a signal in which the low frequency noise and the high frequency noise included in the wobble signal Swb are almost eliminated.

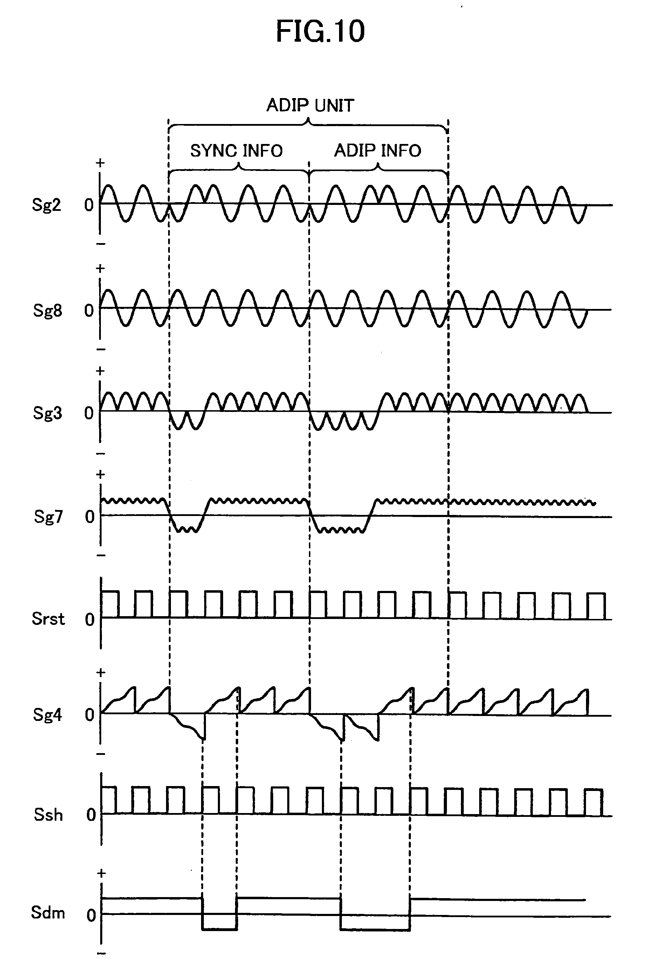

The sine wave generation circuit g8 produces a sine wave signal Sg8 with the frequency identical with the frequency of the adjustment timing clock signal Stim', based on the adjustment timing clock signal Stim' (reference should be made to the signal Sg8 of Figure 10). The sine wave signal Sg8 thus generated is provided to the multiplier g3 and the control signal generation circuit g6.

The multiplier g3 multiplies the output signal Sg2 of the lowpass filter g2 and the sine wave signal Sg8. Thereby, the output signal Sg3 of the multiplier g3 becomes a positive signal in the case the signal Sg2 and the signal Sg8 are in the same phase while it becomes a negative signal in the case the signal Sg2 and the signal Sg8 are in the anti phase relationship (see signal Sg3 of Figure 10). The result of the multiplication in the multiplier g3 is provided to the integration circuit g4 and the low level detection circuit g7.

The control signal generation circuit g6 produces a reset signal Srst indicating reset to the integration circuit g4 and a sampling signal Ssh indicating sampling to the sample and hold circuit g5 based on the sine wave signal Sg8. Here, a pulse signal synchronized to the starting timing of one period of the sine wave is provided as the reset signal Srst (reference should be made to the signal Srst of Figure 10). Further, it should be noted that a pulse signal having a leading edge slightly advanced with regard to the reset signal Srst is provided for the sampling signal Ssh, in view of the need of conducting sampling before the integration circuit g4 is reset (although not very clear from Figure 10, it should be noted that the signal Ssh of Figure 10 rises slightly in advance of the reset signal Srst.) The reset signal Srst thus produced is provided to the integration circuit g4 and the sampling signal Ssh is provided to the sample and hold circuit g5.

The integration circuit g4 is reset with the rising timing of the reset signal Srst from the control signal generation circuit g6 and integrates the output signal Sg3 of the multiplier c24 in each period of the sine wave signal Sg8 (reference should be made to the signal Sg4 of Figure 10). The signal Sg4 of the integration circuit g4 is provided to the sample and hold circuit g5.

The sample and hold circuit g5 carries out sampling of the output signal Sg4 of the integration circuit g4 in synchronization with the sampling signal from the control signal generation circuit g6. Here, it should be noted that the signal Sg4 is sampled and held at the rising timing of the sampling signal Ssh (Reference should be made to the signal Sdm of Figure 10). The signal of the sample and hold circuit g5 is provided to the address decoding circuit 28h and the CPU 40 as the demodulation signal Sdm.

The low level detection circuit g7 detects the low level region of the output signal Sg3 (reference should be made to the signal sg7 of Figure 10). The signal Sg7 of the low level detection circuit g7 is provided to the address decoding circuit 28h.

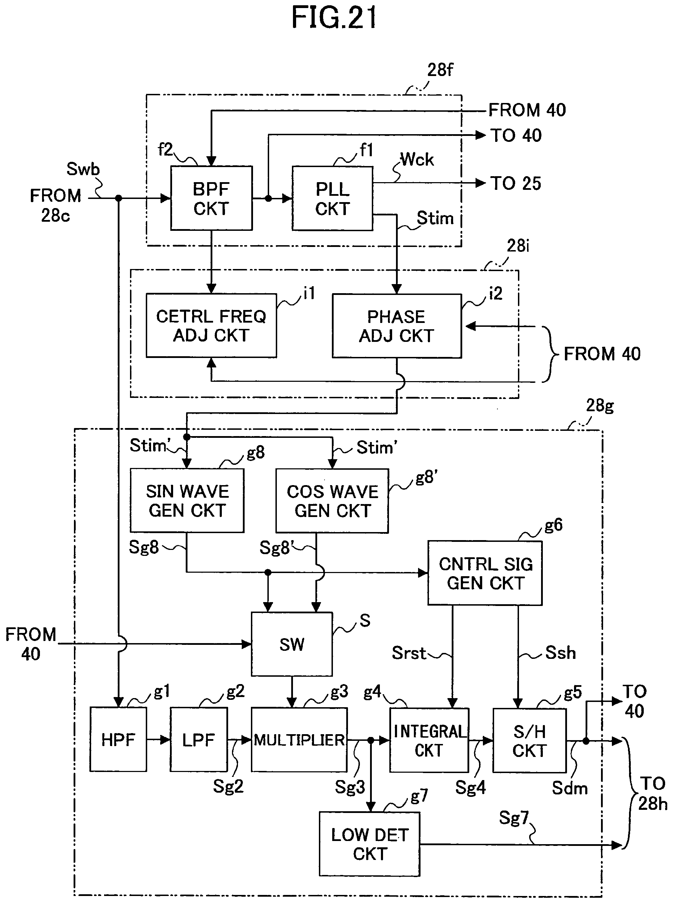

Figure 21 is a circuit diagram showing other construction example of the circuit of Figure 9. In Figure 21, it should be noted that the circuit elements designated by the same reference numerals as in the case of Figure 9 are similar to those shown in Figure 9 and detailed description thereof will be omitted. It should be noted that the circuit of Figure 21 is different over the one shown in Figure 9 in the point that a cosine wave signal Sg8 is produced from the adjustment timing clock signal Stim' by a cosine wave generation circuit g8', in addition to the generation of the sine wave signal Sg8 from the adjustment timing clock signal Stim' by the sine wave generation circuit g8. The cosine wave signal Sg8' is a signal of a frequency identical to the frequency of the sine wave signal Sg8 but has a different phase. In the present example, there exists a phase difference of 90 degrees between these two signals. Further, the switch S can output one of the sine wave signal Sg8 and the cosine wave signal Sg8' to the multiplier g3. This switching of the switch S is achieved by a control signal provided by the CPU 40. Further, the phase adjustment circuit 12 adjusts the phase of the adjustment timing clock signal Stim' produced by the phase adjustment circuit 12 in response to the control signal provided by the CPU 40. As a result of this adjustment, the phases of the sine wave signal Sg8 and the cosine wave signal Sg8' are adjusted. Thus, in the case the phase of the sine wave signal Sg8 is (θ+α) degrees, the phase of the cosine wave signal Sg8' becomes (θ+α+90) degrees. Here, it should be noted that α is the amount of phase adjustment of the adjustment timing clock signal Stim' in the phase adjustment circuit 12. This value is a variable value. Thus, the phase adjustment circuit 12 and the sine wave generation circuit g8 form the first signal generation circuit, and the sine wave signal Sg8 is formed as the first clock signal. Further, the second signal generation circuit is formed by the phase adjustment circuit 12 and the cosine wave generation circuit g8' and the cosine wave signal Sg8' is produced as the second clock signal.

Next, the processing executed by the optical disk apparatus 20 will be explained by using the circuit of the construction shown in Figure 21.

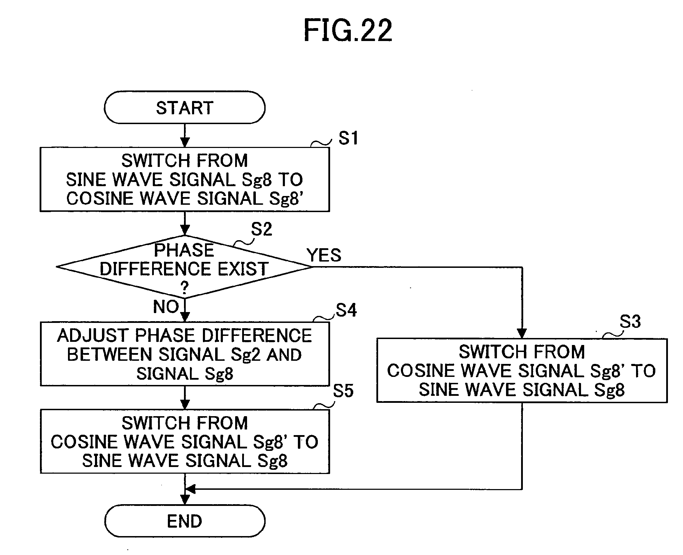

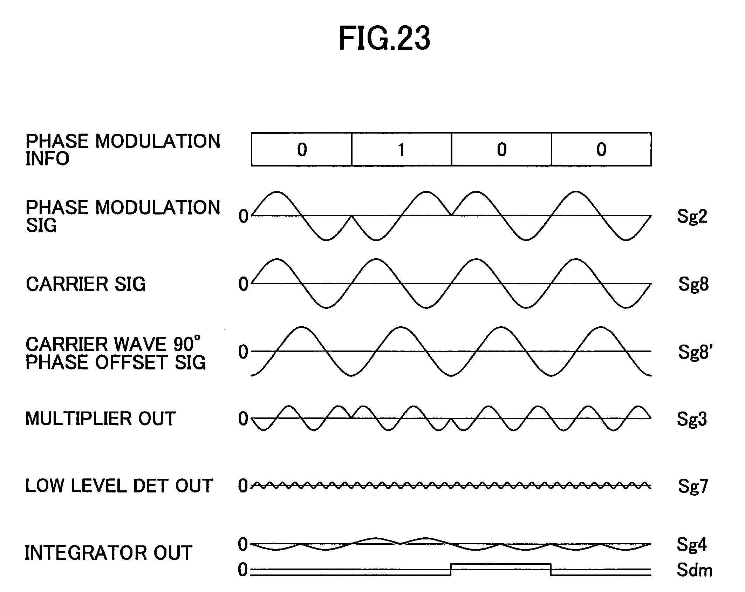

Figure 22 is a flowchart showing the processing conducted by the CPU 40 by using the circuit of the construction of Figure 21. First, the CPU 40 switches the signal supplied to the multiplier g3 from the sine wave signal Sg8 to the cosine wave signal Sg8', by supplying a signal to the switch S from the CPU 40 with a predetermined timing. In the case the phase of the output signal Sg2 of the lowpass filter g2 and the phase of the output signal Sg8 of the sine wave generation circuit g8 are in agreement in this process, the signals take the form as represented in Figure 23. Thus, the signal Sdm supplied to the CPU 40 becomes almost zero (takes a value near zero). In this case, the CPU 40 judges that there is no phase offset (judging means) (N of the step S2) and instructs to the switch S to cause switching from the cosine wave signal Sg8' to the sine wave signal Sg8 (step S3).

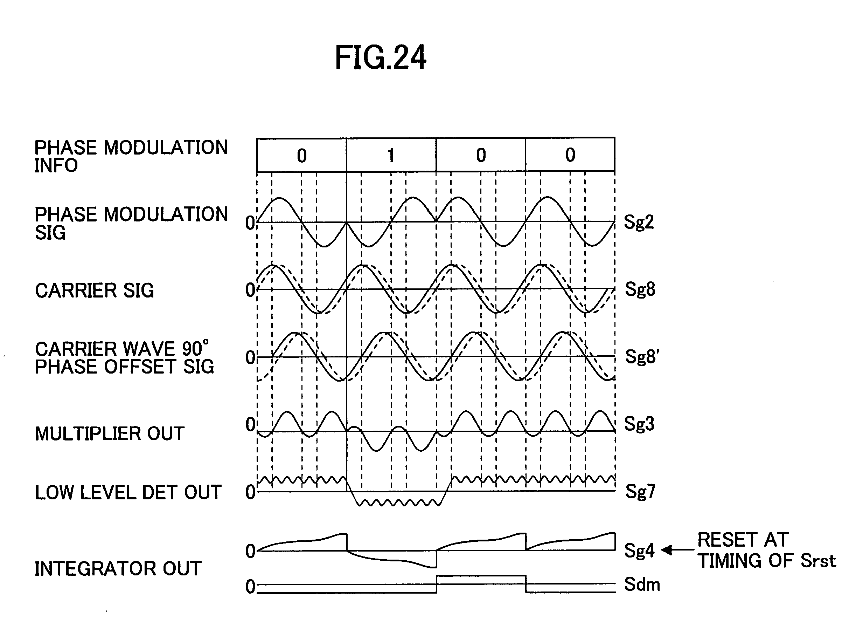

In the case there is a phase difference between the output signal Sg2 and the output signal Sg8 (judging means) (Y of step S2), the signals take the form as shown in Figure 24. In this case, the signal Sdm supplied to the CPU 40 takes a relatively large value as compared with the case of Figure 23. In response to this value, the CPU 40 provides the phase adjustment signal to the phase adjustment circuit 12 and causes adjustment such that the phase difference between the output signal Sg2 and the output signal Sg8 vanishes (so that the state of Figure 23 is realized) (adjustment means)(step S4). Thus, the foregoing value of "α" is adjusted. After this adjustment, the CPU 40 instructs to the switch S so as to carry out switching fro the cosine wave signal Sg8' to the sine wave signal Sg8 (step S5).

While the example of Figure 5 shows the phase modulation part (the part "1" of the phase modulation information), it should be noted that the sign of the signal Sdm is determined depending on the advance or leg of the phase when the phase deviation adjustment is to be carried out by the monotone wave part other than the phase modulation part. Thus, the CPU 40 can determine uniquely whether to achieve the phase adjustment by retarding or advancing the phase in response to the sign (+,-) the signal Sdm, and it becomes possible to achieve the phase adjustment of the phase adjustment circuit 12 in short time.

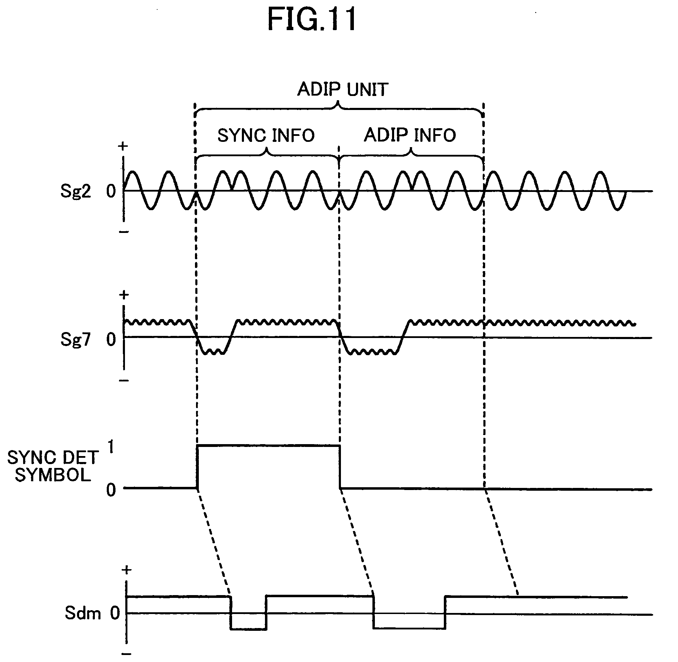

Referring back to Figure 8, the address decoding circuit 28h produces a synchronization detection signal (see Figure 11) for monitoring the part (referred to hereinafter as "synchronization information signal" for the sake of convenience) corresponding to the synchronization information part of the demodulation signal Sdm, based on the output signal Sg7 of the low level detection circuit g7. It should be noted that this synchronization signal changes from 0 (low level) to 1 (high level) of from 1 to 0 in correspondence to the zero-crossing of the output signal Sg7 of the low level detection circuit g7 at the time of changing the level thereof from the + level to the - level. Upon detection of the synchronization information signal, the address decoding circuit 28h determines whether the synchronization information stored in the foregoing synchronization information signal is the word synchronization information or the bit synchronization information, and when it is the bit synchronization information, the address decoding circuit 28h extracts the part corresponding to the ADIP information part (referred to hereinafter as "ADIP information signal" for the sake of convenience). Further, the address decoding circuit 28h decodes the address data from each of the ADIP information signals when the extracted ADIP information signals has reached a predetermined amount (51 bit amount in the present case). The address data thus decodes is provided to the CPU 40 as the address signal Sad.

Referring back to Figure 1, the servo controller 33 produces the focusing control signal for correcting the focusing error in response to the focusing error signal from the servo signal detection circuit 28b and the tracking control signal for correcting the tracking error in response to the tracking error signal. Each control signal thus produces is supplied to the motor drive 27 at the time of servo-on while not supplied at the time of servo-off. Servo-on and Servo-off are set by the CPU 40.

It should be noted that the motor driver 27 provides the driving signal of the focusing actuator to the optical pickup apparatus 23 based on the focusing control signal and the driving signal of the tracking actuator to the optical pickup apparatus 23 based on the foregoing tracking control signal. Thus, the tracking control and the focusing control are achieved by using the servo signal detection circuit 28b, the servo controller 33 and the motor driver 27. Further, the motor driver produces the driving signals of the spindle motor 22 and the seek motor based on the control signal of the CPU 40.

The buffer RAM 34 has a buffer area for temporary storage of data to be recorded on the optical disk 15 (recording data) and the data reproduced from the optical disk 15 (playback data) and a variable region for storing various program variables.

The buffer manager 37 manages the in-and-out of data to and from the buffer RAM 34. The buffer manager 37 notifies to the CPU 40 when the data amount accumulated in the buffer area of the buffer RAM 34 has reached a predetermined amount.

The encoder 25 takes out the recording data stored in the buffer RAM 34 via the buffer manager 37 based on the instruction of the CPU 40 and produces a writing signal to be written into the optical disk by applying data modulation, addition of error correction codes, and the like. The writing signal thus produced is provided to the laser control circuit 24 together with the foregoing reference clock signal Wck.

The laser control circuit 24 controls the power of the laser beam irradiated upon the optical disk 15. At the time of recording, the driving signal of the laser diode is produced for example based on the recording condition, the light emission characteristics of the laser diode LD, the writing signal from the encoder 25, the reference clock signal Wck, and the like.

The interface 38 is the bidirectional interface to the host and may be the one in conformity with the ATAPI (AT Attachment Packet Interface) standard, for example.

The flash memory 39 has a program area and a data area and a program described by a code readable by the CPU 40 is stored in the program area. On the other hand, the data area stores the information regarding the optical emission characteristics of the laser diode LD, the information (hereinafter seek information) regarding the seek operation of the optical pickup apparatus 23, the recording condition, the central frequency of the bandpass filter circuit f1 for each linear velocity, and the like.

The CPU 40 controls the various part mentioned above according to the program stored in the program area of the flash memory 39 and stores the data or the like necessary for the control in the variable area of the buffer RAM 34 or the RAM 41. It should be noted that the CPU 40 is provided with an A/D converter and a D/A converter not illustrated, and the analog signal is supplied to the CPU 40 via the A/D converter. Further, the signal from the CPU 40 is supplied to an analog circuit via the D/A converter.

### <<ACQUISITION PROCESSING OF THE ADJUSTMENT AMOUNT>>

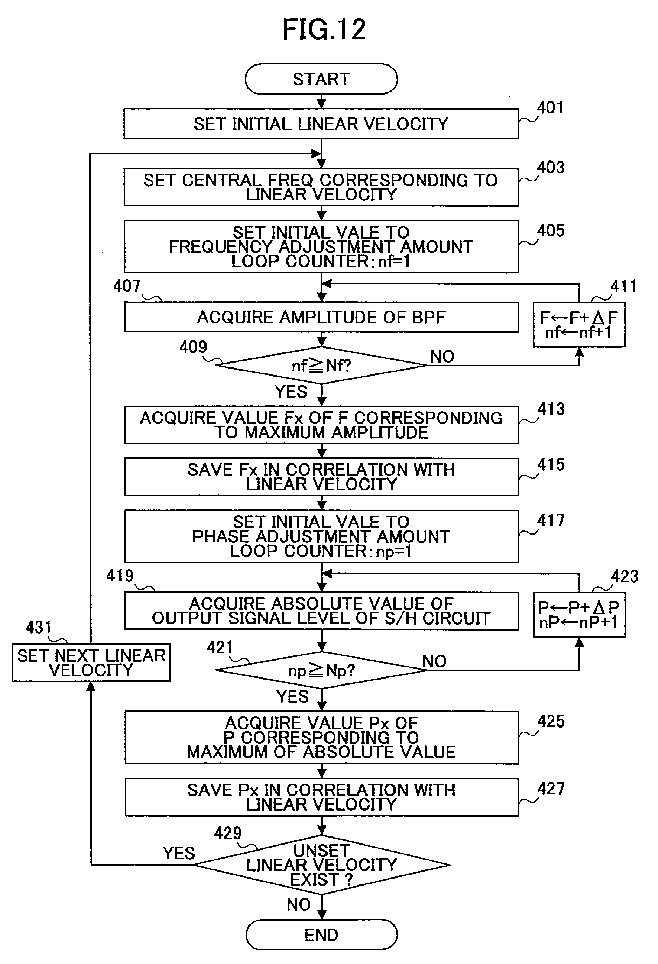

Next, the processing for acquiring the optimum adjustment amount (referred to hereinafter as "optimum frequency adjustment amount") of the central frequency of the bandpass filter circuit f1 and the processing for acquiring the optimum adjustment amount (referred to hereinafter as "optimum phase adjustment amount") of the phase of the timing clock signal Stim, carried out at least in one of the steps of manufacturing the optical disk apparatus 20, the adjustment step and the inspection step as noted before, will be explained with reference to Figure 12. The flowchart of Figure 12 corresponds to a series of processing algorithm executed by the CPU 40. Thus, when the processing request for the acquisition of the optimum adjustment amount is detected, the first address of the program corresponding to the flowchart of Figure 12 is set in a program counter of the CPU 40 and the processing for acquiring the optimum adjustment acquisition processing is started. Here, it is assumed that the optical disk apparatus 20 is capable of carrying out recording and playback at various line velocities.

In the first step 401, a reference linear velocity (1.2 - 1.4m/sec) is set as the initial linear velocity.

Next, in the step S403, the data area of the flash memory 39 is referred to and the central frequency corresponding to the linear velocity thus set is set in the bandpass filter circuit f1.

Next, in the step 405, a predetermined initial value is set to the frequency adjustment amount (designated as F) and the frequency adjustment signal including the information about this frequency adjustment amount F is provided to the central frequency adjustment circuit i1. With this, the central frequency of the bandpass filter circuit f1 is adjusted in response to the value of the frequency adjustment amount F. Further, an initial value 1 is set in a loop counter (designated as nf).

Next, in the step 407, the amplitude of the output signal of the bandpass filter circuit f1 is acquired. Further, the result of the acquisition is saved in the RAM 41 with correlation to the corresponding value of the frequency adjustment amount F.

Next, in the step 409, judgment is made whether or not the value of the loop counter nf is equal to or larger than the predetermined value Nf (≧2). Because nf=1, this judgment in the step 409 becomes negative and the process moves to the step 411.

In this step 411, a preset variance ΔF is added to the frequency adjustment amount F and the frequency adjustment value F is updated. Thereafter, the frequency adjustment signal including the information about the updated frequency adjustment amount F is provided to the central frequency adjustment circuit i1. With this, the central frequency of the bandpass filter circuit f1 is adjusted in response to the updated value of the frequency adjustment amount F. Further, 1 is added to the loop counter nf, and the process returns to the foregoing step 407.

Thereafter, the processing of the step 407 →409→411 is repeated until the result of the judgment of the step 409 becomes positive.

When the value of the loop counter nf has increased to Nf or more, the judgment in the step 409 becomes positive and the process moves to the step 413.

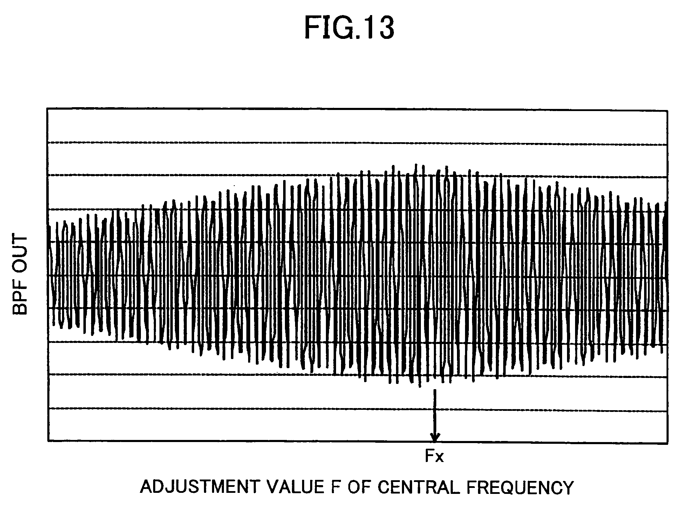

In this step 413, the maximum value of the amplitude (maximum amplitude) is obtained from the plural acquisition results for the amplitude saved in the RAM 41, and the value of the frequency adjustment amount F (designated as Fx) corresponding to the maximum amplitude is extracted. Thereby, this is used as the optimum frequency adjustment amount (See Figure 13).

Next, in the step 415, the value Fx is stored in the data area of the flash memory 39 with correlation to the corresponding linear velocity.

Next, in the step 417, a predetermined initial value is set for the phase adjustment amount (designated as P), and the phase adjustment signal containing the information of the phase adjustment amount P is provided to the phase adjustment circuit 12. With this, the phase of the timing clock signal Stim is adjusted in response to the value of the phase adjustment amount P in the phase adjustment circuit 12. Further, the initial value 1 is set to a loop counter (designated as np).

Next, in the step 419, the output signal of the sample and hold circuit g5, in other words, the absolute value of the signal level of the demodulated signal Sdm is acquired. Further, the result of the acquisition is saved in the RAM 41 with correlation to the corresponding value of the phase adjustment amount P.

Next, in the step 421, judgment is made whether or not the value of the loop counter np is equal to or larger than the preset value Np (≧2). Because np =1, the result of the judgment at this time becomes negative and the process moves to the step 423.

In this step 423, a predetermined variance Δp is added to the phase adjustment amount P and the value of the phase adjustment amount P is updated. Thereafter, the phase adjustment signal including the information about the updated phase adjustment amount P is provided to the phase adjustment circuit 11. With this, the phase of the timing clock signal Stim is adjusted in the phase adjustment circuit 12 in response to the value of the phase adjustment amount P. Further, 1 is added to the loop counter np, and the process returns to the step 419.

Thereafter, the steps 419→421→423 are repeated until the result of the judgment of the step 421 becomes positive.

When the value of the loop counter np becomes Np or more, the judgment in the step 421 becomes positive, and the process moves to the step 425.

In this step 425, the maximum value is obtained from the plural absolute values acquired and saved in the RAM 41 and the value (designated as Px) of the phase adjustment amount P corresponding to the maximum value is extracted. The value thus extracted is used for the optimum phase adjustment amount.

Next, in the step 427, the foregoing value Px is stored in the data area of the flash memory with correlation to the corresponding linear velocity.

Next, in the step 429, judgment is made whether or not there exits a linear velocity not yet set. If there is such linear velocity not yet set, the result of the judgment becomes positive and the process moves to the step 431.

In this step 431, the next linear velocity is set. Thereafter, the process returns to the step 403.

When there is no unset linear velocity in the step 429, the judgment in the step 429 becomes negative and the processing for acquiring the optimum adjustment amount is terminated.

### <<RECORDING PROCESSING>>

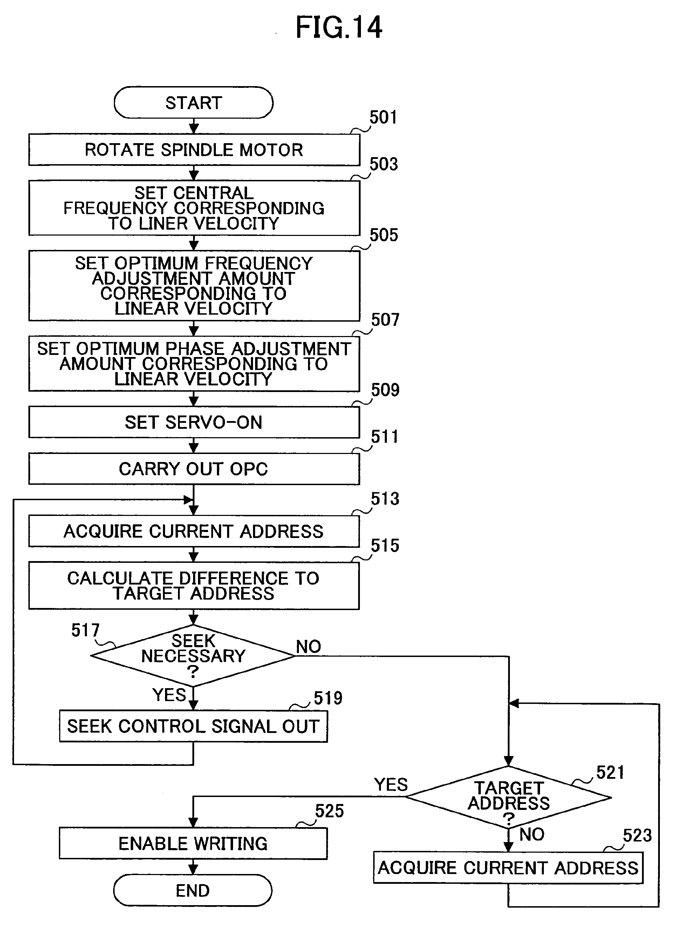

Next, the processing <recording processing> carried out in the optical disk apparatus 20 upon reception of a recording request command from a host will be explained briefly with reference to Figure 14. The flowchart of Figure 14 corresponds to a series of processing algorithms executed by the CPU 40, wherein the first address of the program corresponding to the flowchart of Figure 14 is set to the program counter of the CPU 40 upon reception of the recording request command from the host and the recording processing is thus started. Here, it is assumed that the linear velocity is not changed during the recording processing.

In the first step 501, a control signal for controlling the rotation of the spindle motor 22 is produced based on the linear velocity corresponding to the recording speed (referred to hereinafter as "recording linear velocity" for the sake of convenience) and the control signal is provided to the motor driver 27. Further, notification is made to the reproducing signal processing circuit 28 indicating that a recording request command is received from the host. Further, accumulation of the data (recording data) received from the host is instructed to the buffer manager 37.

Next, in the step 503, the central frequency of the bandpass filter circuit f1 corresponding to the foregoing recording linear velocity is extracted from the data area of the flash memory 39 and is set to the bandpass filter circuit f1.

Next, in the step 505, the optimum frequency adjustment amount corresponding to the recording linear velocity is extracted from the data area of the flash memory 39, and the frequency adjustment signal containing the information of the aforementioned optimum frequency adjustment amount is provided to the central frequency adjustment circuit i1. With this, the central frequency of the bandpass filter circuit f1 is adjusted in response to the optimum frequency adjustment amount.

Next, in the step 507, the optimum phase adjustment amount corresponding to the recording linear velocity is extracted from the data region of the flash memory 39 and the phase adjustment signal containing the information about said optimum phase adjustment amount is provided to the phase adjustment circuit 12. With this, the phase of the timing clock signal Stim is adjusted in the phase adjustment circuit 12 in response to the optimum phase adjustment amount.

Next, in the step 509, confirmation is made that the optical disk 15 is rotating at the foregoing linear velocity, and the serve-on is set to the servo controller 33. With this, the tracking control and the focusing control are achieved as explained before. It should be noted that the tracking control and the focusing control are achieved as necessary until the recording processing is finished.

Next, in the step 5111, an optimum recording power is acquired based on the recording speed by carrying out OPC (optimum Power Control). More specifically, test writing of predetermined data is made to a test writing area called PCA (Power Calibration Area) while changing the recording power stepwise, and the recorded data is reproduced sequentially thereafter. Thereby, it is judged that the case in which the value of the asymmetry detected from the RF signal agrees almost with the target value obtained by experiment in advance, provides the best recording quality, and the recording power corresponding to this is used for the optimum recording power.

Next, in the step 513, the current address is acquired based on the address signal Sad from the address decoding circuit 28h.

Next, in the step 515, a difference (address difference) between the current address and the target address extracted from the recording request command is calculated.

Next, in the step 517, judgment is made whether or not it is necessary to carry out seeking based on the address difference. In the present example, a predetermined threshold value stored in the flash memory 39 as a part of the seek information is referred to. If the address difference exceeds the foregoing threshold value, the judgment becomes positive, and the process moves to the step 519.

Next, in the step 519, a control signal of the seek motor corresponding to the address difference is provided to the motor driver 27. With this, the seek motor is driven and the seek operation is performed. After this, the process returns to the step 513.

In the step 517, it should be noted that the judgment of the step 517 becomes negative if the address difference does not exceeds the threshold value, and the process moves to the step 521.

In this step 521, it is judged whether or not the current address agrees with the target address. If the current address does not agree with the target address, the judgment becomes negative and the process moves to the step 523.

In this step 523, the current address is acquired based on the address signal Sad from the address decoding circuit 28h. Further, the process returns to the step 521.

Further, the processing of the steps 521→ 523 is carried out repeatedly, until the judgment in the step 521 becomes positive.

When the current address agrees with the target address, the judgment in the step 521 becomes positive, and the process proceeds to the step 525.

In this step 525, writing into the encoder 25 is allowed. With this the recording data is written into the optical disk via the encoder 25, the laser control circuit 24 and the optical pickup apparatus 23. When the entire recording data has been written, a predetermined terminating processing is carried out and the recording processing is terminated.

### <<PLAYBACK PROCESSING>>

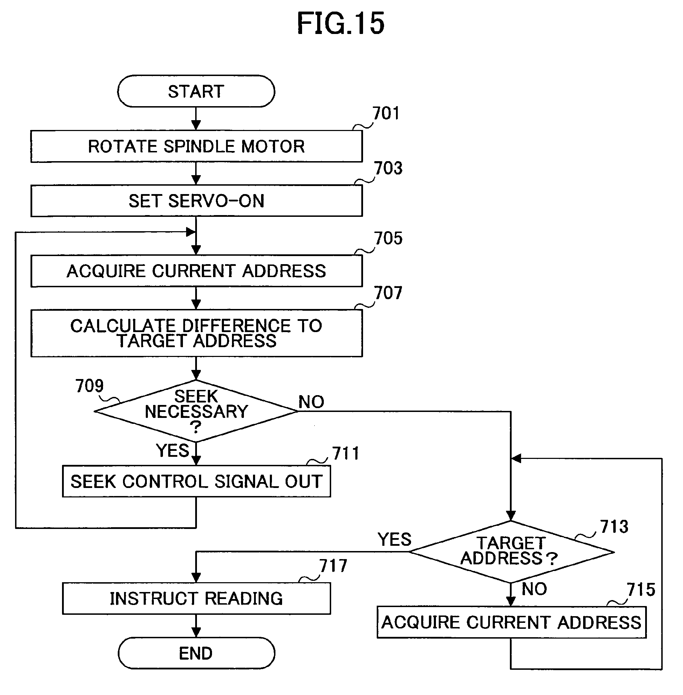

Next, the processing (playback processing) carried out in the optical disk apparatus 20 upon reception of the playback request command from the host will be explained with reference to Figure 15. It should be noted that the flowchart of Figure 15 corresponds to a series of processing algorithms executed by the CPU 40, wherein the playback processing is started upon reception of the playback request command from the host by setting the first address of the program corresponding to the flowchart of Figure 15 in the program counter of the CPU 40.

In the first step 701, the control signal controlling the rotation of the spindle motor 22 is produced based on the linear velocity (refereed to hereinafter as "playback linear velocity" for the sake of convenience in correspondence to the playback speed, and the control signal thus produced is provided to the motor driver 27 and notifies to the reproduced signal processing circuit 28 of the fact that the playback request command has been received from the host.

Next, in the step 703, confirmation is made that the optical disk 15 is rotated at the foregoing playback linear velocity, and servo-on is set to the servo controller 33. With this, the tracking control and focusing control are achieved as explained before. Further, the tracking control and the focusing control are performed as necessary up to the end of the playback processing. Further, the address data of the tracks are provided to the CPU 40 as necessary from the decoder 28e based on the RF signal.

Next, in the step 705, the current address is acquired from the address data from the decoder 28e.

Next, in the step 707, a difference between the current address and the target address extracted from the playback request command is calculated.

Next, in the step 709, judgment is made whether or not seek is necessary, similarly to the step 517. If it is determined that seek is necessary, the result of the judgment becomes positive and the process moves to he step 711.

In the step 711, a control signal of the seek motor corresponding to the foregoing address difference is provided to the motor driver 27. Further, the process returns to he step 705.

When there is no need of seek in the step 709, the result of the judgment becomes negative, and the process proceeds to the step 713.

In this step 713, judgment is made whether or not the current address agrees with the target address. If the current address is not in agreement with the target address, the result of judgment of this step becomes negative and the process proceeds to the step 715.

In this step 721, the current address is acquired based on the address data from the decoder 28e. Further, the process returns to the step 713.

Thereafter, the processing of the steps 713 →715 is repeated until the result of the judgment of the step 713 becomes positive.

When the current address as agreed with the target address, on the other hand, the judgment in the step 713 becomes positive and the process moves to the step 717.

In this step 717, reading is instructed to the reproduced signal processing circuit 28. With this, the reproduced signal processing circuit 28 acquires the playback data and stores the same in the buffer RAM 34. This playback data is transferred to the host via the buffer manager 37 and the interface 38 with each sector unit. When the playback of the data instructed by the host is completed, a predetermined termination processing is carried out, and thus this, the playback processing is terminated.

As will be explained from the foregoing explanation, the optical disk apparatus 20 of the present embodiment realizes the wobble signal demodulating circuit by using the clock signal generation circuit 28f, the adjustment circuit 28i and the demodulation signal generation circuit 28g.

Further, the flash memory 39 realizes the phase adjustment memory and the frequency adjustment memory.

Further, the optical pickup apparatus 23, the CPU 40 and the program executed by the CPU 40 realizes the data recording means. Further, the CPU 40 and the program executed by the CPU 40 realize the phase adjustment signal generation means and the frequency adjustment signal generation means. However, the present invention is by no means limited to these. More specifically, the embodiment explained hereto fore is merely an example, and it is also possible to realize at least a part of the various means, realized by the foregoing CPU 40 and the program in the present embodiment, by way of hardware. Alternatively, the entire construction can be realized by hardware.

As explained heretofore, the central frequency of the bandpass filter circuit f1 in the clock signal generation circuit 28f is adjusted in the optical disk apparatus 20 of the present embodiment by the central frequency adjustment circuit i1 such that the amplitude of the bandpass filter circuit f1 becomes maximum in response the linear velocity of the rotating optical disk. With this, degradation of the output signal of the bandpass filter circuit f1 is prevented even when the recording speed is increased, and it becomes possible to extract the carrier wave component contained in the wobble signal Swb with high precision. Thus, it becomes possible to produce the timing clock signal with high precision in the PLL circuit f2, and as a result, it becomes possible to improve the precision of demodulation of the phase modulation wave part included in the wobble signal Swb. Further, it becomes possible to produce the reference clock with high precession in the PLL circuit f2.

Further, the bandpass filter circuit f1 can be constructed by general purpose components, and the cost of the components can be reduced. Further, it becomes possible to increase the tolerance of the filter characteristics of the bandpass filter circuit f1 from the design value, and the adjustment process can be simplified.

Further, the phase of the timing clock signal Stim produced by the PLL circuit f2 is adjusted by the phase adjustment circuit i2 such that the absolute level of the signal provided from the demodulation signal generation circuit 28g becomes maximum in response to the linear velocity of the rotating optical disk. With this, it becomes possible to present the degradation of the output signal of the multiplier g3 even in the case the recording speed is increased, and it becomes possible to detect the synchronization signal with high precision. Further, as a result of this, it becomes possible to demodulate the ADIP information part with high precision. In other words, it becomes possible to acquire the address information with high precision.

Further, because the reference clock signal is produced with high precision and the address data is acquired with high precision, it becomes possible to achieve the recording with high recording quality.

While explanation has been made in the foregoing embodiment for the case in which the amplitude of the output signal of the bandpass filter circuit f1 is acquired by the CPU 40, the present invention is by no means limited to such an example and it is also possible to provide the amplitude detection circuit i3 detecting the amplitude of the output signal of the bandpass filter circuit f1 in the adjustment circuit 28i. The result of detection of this amplitude detection circuit i3 is provided to the CPU 40.

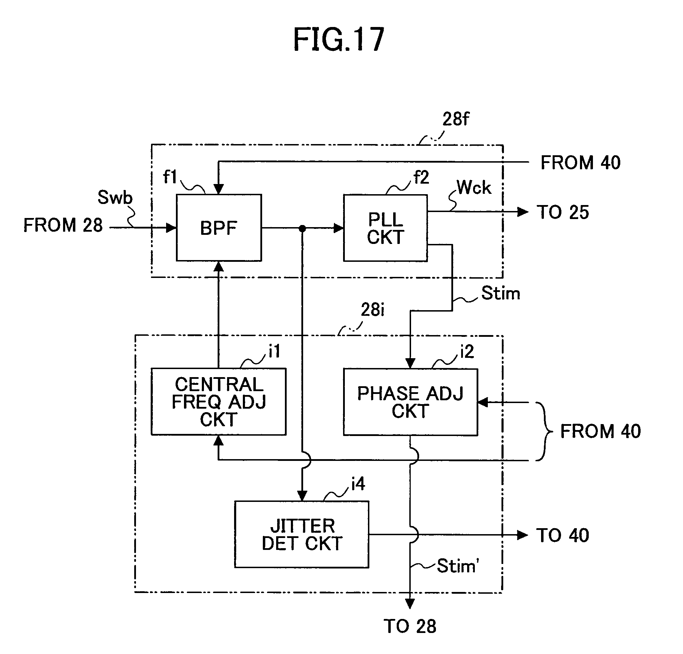

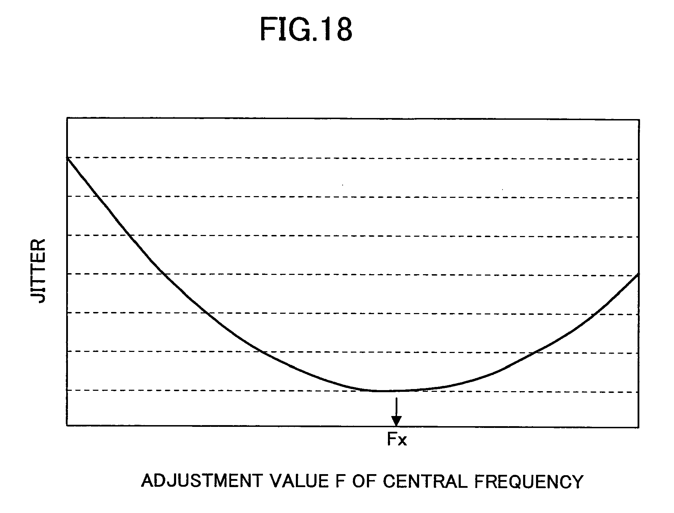

Further, while the foregoing embodiment was explained for the case of using the frequency adjustment value that maximizes the amplitude of the output signal of the bandpass filter circuit f1 for the optimum frequency adjustment value, the present invention is not limited to such a specific case and it is also possible to use the frequency adjustment value that minimizes the jitter in the output signal of the bandpass filter circuit f1 may be used for the optimum frequency adjustment value. In such a case, it is possible to provide a jitter detection circuit i4 detecting the jitter of the output signal of the bandpass filter circuit f1 to the foregoing adjustment circuit 28j as shown in Figure 17 and provide the result of the detection of the jitter detection circuit i4 to the CPU 40. Thus, in this case, the jitter of the output signal of the bandpass filter circuit f1 is acquired via the jitter detection circuit i4 in place of acquiring the amplitude of the output signal of the bandpass filter circuit f1 in the step 407. Further, in the step 413, the minimum value of the jitter is acquired from the plural acquisition results of the jitter saved in the RAM 41, and the value of the frequency adjustment amount F corresponding to the minimum thereof is extracted (see Figure 18). The value thus extracted is used for the optimum frequency adjustment value.

While it has been described about the case of acquiring the optimum frequency adjustment value from the result of actual measurement of the amplitude of the output signal of the bandpass filter f1 in the foregoing embodiment, it should be noted that the present invention is not limited to such a case and it is possible to acquire the optimum frequency adjustment value based on the simulation or theoretical calculation.

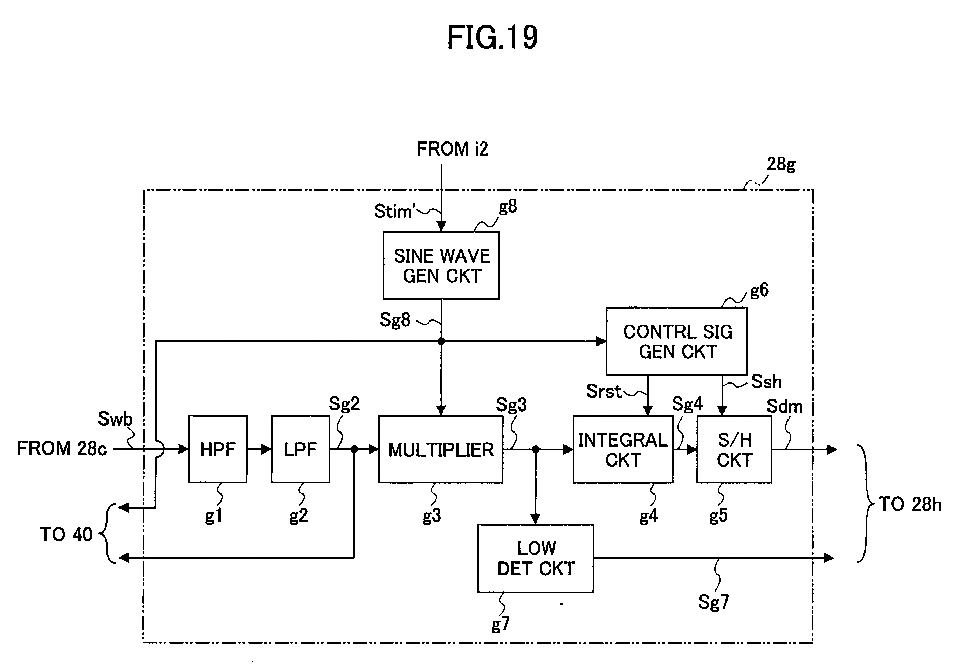

Further, while the foregoing embodiment has been explained for the case of using the phase adjustment amount that maximizes the absolute value of the signal level of the demodulation signal Sdm for the optimum phase adjustment amount, the present invention is not limited to such a case and it is also possible to detect the phase difference between the output signal Sg8 of the sine wave generation circuit g8 and the output signal Sg2 of the low pass filter g2 and use the phase adjustment amount that causes the phase difference therebetween to become zero for the optimum phase adjustment amount as shown in Figure 19.

Further, while the foregoing embodiment has been explained for the case of acquiring the optimum phase adjustment amount based on the actual measurement of the signal level of the demodulation circuit Sdm, the present invention is not limited to such a case and the optimum phase adjustment value can be acquired from the simulation or theoretical calculation.

Further, while the foregoing embodiment has been explained for the case in which the optimum adjustment amount acquisition process is carried out in any of the manufacturing step, the adjustment step and the inspection step of the optical disk apparatus 20, the present invention is not limited to these and the optimum adjustment amount acquisition process can be carried out in response to he request from the host.

Further, while the foregoing embodiment has been explained for the case of acquiring the optimum frequency adjustment amount and the optimum phase adjustment amount in the foregoing optimum adjustment amount acquisition process, the present invention is not limited to such a case and it is possible to acquire only one of the optimum frequency adjustment amount and the optimum phase adjustment amount.

Further, in the case the linear velocity is changed during the recording, the central frequency, the optimum frequency adjustment amount and the optimum phase adjustment amount are set again in response to the new linear velocity in the foregoing embodiment.

Further, in the case the optimum frequency adjustment amount corresponding to the specified linear velocity is not stored in the data area of the flash memory 39 in the foregoing embodiment, the optimum frequency adjustment amount stored in the data area of the flash memory 39 for a difference linear velocity is referred to, and the optimum frequency adjustment amount for the specified linear velocity may be estimated by carrying out an approximation calculation or interpolation calculation.

Further, in the case the optimum phase adjustment amount for the specified linear velocity is not stored in the data area of the flash memory 39, it is also possible to refer to the optimum phase adjustment amount stored in the data area of the flash memory 39 for a different linear velocity and estimate the optimum phase adjustment amount for the specified linear velocity by carrying out an approximation calculation or interpolation calculation.

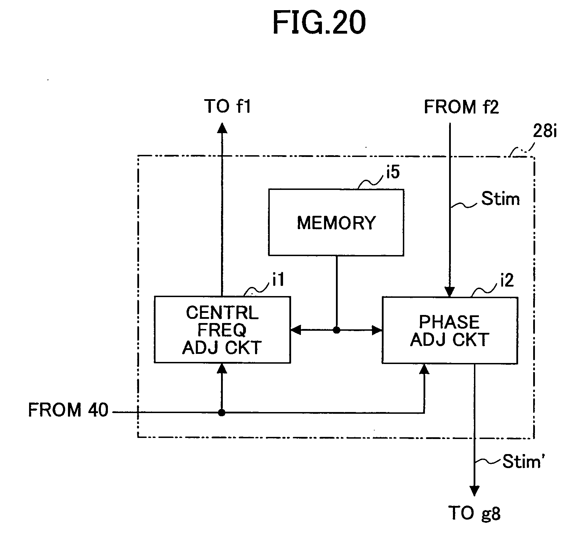

Further, while the foregoing embodiment has been explained for the case the optimum frequency adjustment amount has been provided by the CPU 40, the present invention is not limited to such a specific example and it is also possible to provide a memory i5 storing the relationship between the optimum frequency adjustment amount and the linear velocity in the adjustment circuit 28i as shown in Figure 20 and extract the corresponding optimum frequency from the memory i5 by the central frequency adjustment circuit i1 based on the linear velocity information from the CPU 40. In this case, it is also possible to store the relationship between the optimum phase adjustment amount and the liner velocity in the memory i5 and extract the optimum phase adjustment amount from the memory i5 by the phase adjustment circuit i2 based on the linear velocity information from the CPU 40.

Further, it is possible that the frequency adjustment amount in the foregoing central frequency adjustment circuit i1 is a fixed value in the case the optimum frequency adjustment amount does not change very much with the linear velocity.

Further, the phase adjustment amount of the phase adjustment circuit i2 may be a fixed value in the case the signal delay amount in the clock signal generation circuit 28f does not change very much by the linear velocity.

Further, in the foregoing embodiment, it is possible that the phase adjustment of the timing clock signal Stim in the phase adjustment circuit i2 may be omitted in the case the signal delay in the clock signal generation circuit 28f is small. In this case, the phase adjustment circuit i2 can be omitted.

While the optimum frequency adjustment amount and the optimum phase adjustment amount are acquired for each linear velocity in the foregoing embodiment, it is also possible to acquire at least one of the optimum frequency adjustment amount and the optimum phase adjustment amount for each temperature, in the case there is caused a large temperature change, by providing a temperature sensor in the vicinity of the optical pickup apparatus 23.

Further, while the foregoing embodiment has been explained for the case the optical disk 15 is a disk in compliance with the standard of DVD+R, the present invention is not limited to this, and the present invention can be applicable also in the case the optical disk is a DVD+RW disk.

Further, while the foregoing embodiment has been explained for the case of the optical disk apparatus capable of recording and playback of data, the present invention is not limited to such a case and the present invention is applicable to the optical disk apparatus as long as the optical disk apparatus is the one capable of recording data.

Further, while the foregoing embodiment has been explained for the case the optical pickup apparatus 23 has a single laser diode, the present invention is not limited to such a case and the optical pickup apparatus may include plural laser diodes producing optical beams of mutually different wavelengths. Particularly, the optical pickup apparatus may be the one having at least one of the laser diode producing the optical beam of the wavelength of about 405nm, the laser diode producing the optical beam of about 660nm, and the laser diode producing the optical beam of about 780nm. Thus, the optical disk apparatus may be the one designed to handle plural kinds of optical disks of different standards.

Further, while the foregoing embodiment has been explained for the case the interface 38 complies with the ATAPI standard, the present invention is not limited to this particular case, and the foregoing interface 38 may comply with the standard of any of ATA (AT Attachment), SCSI (Small Computer System Interface), USB (Universal Serial Bus) 1.0, USB2.0, IEEE1394, IEEE802.3, Serial ATA, and Serial ATAPI,

Further, the present invention is by no limited to specific embodiments disclosed herein but various modifications and variations may be made without departing from the scope of the claimed invention.

## Claims

1. A wobble signal demodulation circuit carrying out phase demodulation of a wobble signal acquired from a reflection light reflected from a recording surface of an optical disk, said recording surface carrying a meandering track thereon, said wobble signal including a carrier wave part having a predetermined fundamental frequency and a phase modulation wave part added with predetermined information, comprising:
a bandpass filter having a central frequency in the vicinity of said fundamental frequency, said bandpass filter extracting a signal of said carrier wave part from said wobble signal;
a frequency adjustment circuit that adjusts said central frequency of said bandpass filter based on a frequency adjustment signal corresponding to a linear velocity of said optical disk under rotation;
a signal generation circuit that produces a clock signal from said extracted signal of said carrier wave part; and
a modulation-wave demodulation circuit that carries out phase demodulation for said phase demodulation part of said wobble signal in synchronization with said clock signal.

2. A wobble signal demodulation circuit carrying out phase demodulation of a wobble signal acquired from a reflection light reflected from a recording surface of an optical disk, said recording surface carrying a meandering track thereon, said wobble signal including a carrier wave part having a predetermined fundamental frequency and a phase modulation wave part added with predetermined information, comprising:
a bandpass filter having a central frequency in the vicinity of said fundamental frequency, said bandpass filter extracts a signal of said carrier wave part from said wobble signal;
a frequency adjustment circuit that adjusts said central frequency of said bandpass filter based on a frequency adjustment signal corresponding to a linear velocity of said optical disk under rotation;
a first signal generation circuit that produces a first clock signal from said extracted signal of said carrier wave part;
a second signal generation circuit that produces a second clock signal from said signal of said carrier wave part or said first clock signal so as to have a frequency identical with a frequency of said fist clock but a phase different from a phase of said first clock signal;
a switch selecting one of said plural clock signals; and
a modulation-wave demodulation circuit that carries out phase demodulation for said phase modulation wave part of said wobble signal in synchronization with said selected clock signal.

3. The wobble signal demodulation circuit as claimed in claim 1 or 2, **characterized in that** said frequency adjustment signal is a signal that contains information about an adjustment amount of said central frequency in which the amplitude of an output signal of said bandpass filter becomes generally maximum.

4. The wobble signal demodulation circuit as claimed in claim 1 or 2, **characterized in that** said frequency adjustment signal is a signal that contains information about an adjustment amount of said central frequency in which the jitter of an output signal of said bandpass filter becomes generally minimum.

5. The wobble signal demodulation circuit as claimed in any of claims 1 - 4, **characterized in that** said wobble signal demodulation circuit further comprises a phase adjustment circuit that adjusts a phase of said clock signal based on a phase adjustment signal corresponding to a linear velocity of said rotating optical disk.

6. The wobble signal demodulation circuit as claimed in claim 5, **characterized in that** said phase adjustment signal is a signal containing information about an adjustment amount of said phase of said clock signal that generally maximizes an absolute value of the signal level of a signal provided by said modulation-wave demodulation circuit.

7. An optical disk apparatus carrying out at least recording, among recording, playback and erasing, of data on an optical disk, comprising:
a wobble signal demodulation circuit as claimed in any of claims 1 - 3 carrying out phase demodulation of a wobble signal acquired from a reflection light from a recording surface of said optical disk carrying a meandering track;
a frequency adjustment signal generation unit that generates said frequency adjustment signal and provides said frequency adjustment signal to said wobble signal demodulation circuit; and
a data recording unit that acquires positional information form an output signal of said wobble signal demodulation circuit and determines a record starting position from said positional information, said date recording unit further recording data to said optical disk.

8. An optical disk apparatus carrying out at least recording, among recording, playback and erasing, of data on an optical disk, comprising:
a wobble signal demodulation circuit as claimed in any of claims 1 - 3 carrying out phase demodulation of a wobble signal acquired from a reflection light reflected from a recording surface of said optical disk;
a frequency adjustment signal generation unit that generates said frequency adjustment signal and provides said frequency adjustment signal to said wobble signal demodulation circuit;
a data recording unit that acquires positional information form an output signal of said wobble signal demodulation circuit and determines a record starting position from said positional information, said date recording unit further recording data to said optical disk;
a judging unit that judges a phase deviation between said clock signal and said wobble signal from a result of said phase demodulation by switching said plural clocks by said switch; and
a phase adjustment unit that adjust a phase of said first clock signal produced by said first signal generation circuit in response to said judgment of said phase deviation.

9. An optical disk apparatus carrying out at least recording, among recording, playback and erasing, of data on an optical disk, comprising:
a wobble signal demodulation circuit as claimed in claim 5 or 6 carrying out phase demodulation of a wobble signal acquired from a reflection light reflected from a recording surface of said optical disk;
a frequency adjustment signal generation unit that produces said frequency adjustment signal and provides said frequency adjustment signal to said wobble signal demodulation circuit;
a phase adjustment signal generation unit that produces said phase generation signal and provides said phase generation signal to said wobble signal demodulation circuit; and
a data recording unit that acquires positional information from an output signal of said wobble signal demodulation circuit and determines a recording start position based on said positional information, said data recording unit further recording data on said optical disk.

10. The optical disk apparatus as claimed in claim 9, **characterized in that** said optical disk apparatus further comprises a phase adjustment memory storing a phase adjustment amount of said clock signal for each said linear velocity of said optical disk.

11. The optical disk apparatus as claimed in claim 10, **characterized in that** said phase adjustment memory is a non-volatile memory.

12. The optical disk apparatus as claimed in claim 10 or 11, **characterized in that** said phase adjustment amount is acquired in any of a manufacturing step, an adjustment step and an inspection step of said optical disk apparatus and stored in said phase adjustment memory.

13. The optical disk apparatus as claimed in any of claims 10 - 12, **characterized in that** said phase adjustment signal generation unit refers to said phase adjustment memory and produces said phase adjustment signal based on a phase adjustment amount corresponding to a specified linear velocity.

14. The optical disk apparatus as claimed in any of claims 10 - 12, **characterized in that** said phase adjustment signal generation unit refers to a phase adjustment amount corresponding to a linear velocity different from a specified linear velocity in the case a phase adjustment amount corresponding to a specified linear velocity is not stored in said phase adjustment memory, said phase adjustment signal generation unit produces aid phase adjustment signal by carrying out a predetermined operation on said phase adjustment amount corresponding to said linear velocity different form said specified linear velocity.

15. The optical disk apparatus as claimed in any of claims 7 - 14, **characterized in that** said optical disk apparatus comprises a frequency adjustment memory storing a frequency adjustment amount of said central frequency for each linear velocity of said optical disk.

16. The optical disk apparatus as claimed in any of claims 7 - 14, **characterized in that** said frequency adjustment memory is a non-volatile memory.

17. The optical disk apparatus as claimed in claim 15 or 16, **characterized in that** said frequency adjustment amount is acquired in any of manufacturing step, adjustment step and inspection step of said optical disk apparatus.

18. The optical disk apparatus as claimed in any of claims 15 - 17, **characterized in that** said frequency adjustment signal generation unit refers to said frequency adjustment memory and produces said frequency adjustment signal based on said frequency adjustment amount corresponding to a specified linear velocity.

19. The optical disk apparatus as claimed in any of claims 15 - 17, **characterized in that** said frequency adjustment signal generation unit refers to a frequency adjustment amount of a different linear velocity stored in said frequency adjustment memory in the case said frequency adjustment amount corresponding to a specified linear velocity is not stored in said frequency adjustment memory, said frequency adjustment signal generation unit produces said frequency adjustment signal corresponding to said specified linear velocity by applying a predetermined operation to said frequency adjustment amount corresponding to said different linear velocity.

20. The optical disk apparatus as claimed in claim 14 or 19, **characterized in that** said predetermined operation is any of approximation operation or interpolation operation.

21. The optical disk apparatus as claimed in any of claims 7 - 20, **characterized in that** said optical disk apparatus is an optical disk complying with any of a DVD+R standard and a DVD+RW standard.
